Europäisches Patentamt

European Patent Office

Office européen des brevets

(11) Veröffentlichungsnummer: **0 214 476 B1**

(12) **EUROPÄISCHE PATENTSCHRIFT**

(45) Veröffentlichungstag der Patentschrift: 26.06.91

(51) Int. Cl.⁵: **H04L 12/42**, H04L 1/16

(21) Anmeldenummer: 86110945.2

(22) Anmeldetag: 07.08.86

(54) **Verfahren und Schaltungsanordnung zum Übertragen von Datensignalen zwischen zwei zu einem Ringleitungssystem gehörenden Steuereinrichtungen.**

(30) Priorität: 11.09.85 DE 3532460

(43) Veröffentlichungstag der Anmeldung:
18.03.87 Patentblatt 87/12

(45) Bekanntmachung des Hinweises auf die
Patenterteilung:
26.06.91 Patentblatt 91/26

(84) Benannte Vertragsstaaten:
AT BE CH DE FR GB IT LI LU NL SE

(56) Entgegenhaltungen:
DE-A- 3 136 495
DE-A- 3 136 586

PROCEEDINGS OF THE SIXTH INTERNATIO-
NAL CONFERENCE ON COMPUTER COMM-
UNICATION, London, GB, 7.-10. September
1982, Seiten 496-501, North-Holland Publishing Co., Amsterdam, NL; K. YAGYU et al.:
"High throughput optical fiber loop network
with effective detection mechanism of lost
or duplicated token"

(73) Patentinhaber: Siemens Aktiengesellschaft
Wittelsbacherplatz 2
W-8000 München 2(DE)

(72) Erfinder: Kerschner, Günther, Ing. grad.
Kemptenerstrasse 61
W-8000 München 71(DE)
Erfinder: Michels-Krohn, Karl-Heinz, Ing. grad.
Galileistrasse 2
W-8033 Martinsried(DE)
Erfinder: Untergruber, Josef, Ing. grad.
Heuberweg 17
W-8201 Nussdorf/Inn(DE)

**Beschreibung**

Die Erfindung betrifft ein Verfahren und eine Schaltungsanordnung zum Übertragen von Datensignalen zwischen über ein taktgesteuertes, richtungsabhängig betriebenes Ringleitungssystem miteinander verbundenen Steuereinrichtungen, nach dem Obergriff des Anspruchs 1 bzw. des Anspruchs 2.

Ein Verfahren der gerade genannten Art ist aus dem Artikel in PROCEEDINGS OF THE SIXTH INTERNATIONAL CONFERENCE ON COMPUTER COMMUNICATION, London, GB, 7.-10. September 1982, Seiten 496-501, North-Holland Publishing Co., Amsterdam, NL; K.YAGYU et al.: "High throughput optical fiber loop network with effective detection mechanism of lost or duplicated token" bekannt.

Es ist nun Aufgabe der vorliegenden Erfindung, einen Weg zu zeigen, wie bei einem Verfahren und einer Schaltungsanordnung der eingangs genannten Art Signalblöcke und Quittungssignale zwischen zwei zu dem Ringleitungssystem gehörenden Steuereinrichtungen sicher und mit einem geringen Steuerungsaufwand übertragen werden können, insbesondere wenn über das Ringleitungssystem Signalblöcke mit variabler Länge übertragen werden.

Gelöst wird die vorstehend aufgezeigte Aufgabe bei einem Verfahren der eingangs genannten Art erfindungsgemäß durch die Merkmale des kennzeichnenden Teils des Anspruchs 1 und bei einer Anordung der eingangs genannten Art durch die Merkmale des kennzeichnenden Teils des Anspruchs 2.

Das Verfahren nach dem Anspruch 1 bringt den Vorteil mit sich, daß für die Erzeugung eines für den Sender eines gerade empfangenen Signalblockes bestimmten Quittungssignals der empfangene Signalblock unmittelbar herangezogen wird, indem unter Löschung der zu dem Signalblock gehörenden Blockanfangskennung lediglich an die durch die Blockendekennung gekennzeichnete Senderadresse ein den Empfang des Signalblockes betreffendes Quittungssignal angefügt wird. Durch die Löschung der Blockanfangskennung ist der weitergeleitete Signalblock nicht mehr als solcher gekennzeichnet. Erkennbar ist jedoch noch die in Verbindung mit der Blockendekennung übertragene Senderadresse, an die von der als Empfänger ausgewählten Steuereinrichtung ein den Empfang des Signalblockes betreffendes Quittungssignal angefügt ist. In derjenigen Steuereinrichtung, von der zuvor der Signalblock abgegeben worden ist, braucht somit lediglich das Auftreten der Senderadresse in Verbindung mit der Blockendekennung überwacht zu werden, um das für sie bestimmte Quittungssignal zu übernehmen.

Die Schaltungsanordnung nach dem Anspruch 2 weist eine Empfangssteuerung und eine aus einem Empfangsspeicher für die Aufnahme von Signalblöcken und einem Quittungsempfänger bestehende Empfängeranordnung auf. Durch die Trennung der Empfängeranordnung in einen Empfangsspeicher und in einen Quittungsempfänger ist es möglich, mit einem geringen Steuerungsaufwand Signalblöcke und Quittungssignale in die jeweilige Steuereinrichtung aufzunehmen und diese in der jeweiligen Empfängeranordnung nachgeschalteten Einrichtungen zu verarbeiten.

Vorteilhafte Ausgestaltungen der Schaltungsanordnung gemäß Patentanspruch 2 gehen aus den Patentansprüchen 3 bis 8 hervor. Ein Vorteil der den Empfangsspeicher betreffenden Ausgestaltungen besteht u. a. darin, daß durch das Vorhandensein eines für den Ablauf von Schreib- und Lesevorgängen von zwei gesonderten Anordnungen her steuerbaren Schreib-/Lese-Speichers eine Anpassung der Arbeitsgeschwindigkeit der Steuereinrichtungen an die Übertragungsgeschwindigkeit innerhalb des Ringleitungssystems möglich ist. Dabei ist es im Hinblick auf den Steuerungsaufwand zweckmäßig, wenn der Schreib-/Lese-Speicher durch die Zähleranordnungen entsprechend dem Patentanspruch 4 umlaufend adressiert wird. Um bei dieser umlaufenden Adressierung des Schreib-/Lese-Speichers ein Überschreiben von bereits in dem Schreib-/Lese-Speicher gespeicherten, jedoch noch nicht ausgelesenen Signalblöcklen zu vermeiden, ist es vorteilhaft, eine Zähleranordnung gemäß Patentanspruch 5 vorzusehen, die den Füllstand des Schreib-/Lese-Speichers überwacht und bei Erreichen eines vorgegebenen Füllstandes die Aufnahme des gerade empfangenen Signalblockes durch eine entsprechende Beeinflussung der für die Abwicklung von Schreibvorgängen vorgesehenen Zähleranordnung abbricht. Eine lediglich einen geringen schaltungstechnischen Aufwand erfordernde Anordnung für die Steuerung der beiden zuletzt genannten Zähleranordnungen bei Abbruch der Aufnahme eines gerade empfangenen Signalblockes geht aus Patentanspruch 6 hervor.

Die Patentansprüche 7 und 8 beziehen sich auf vorteilhafte Ausgestaltungen der Empfangssteuerung und des Quittungsempfängers. Die Empfangssteuerung und der Quittungsempfänger zeichnen sich dabei sowohl durch einen geringen schaltungstechnischen Aufwand als auch durch einen geringen Steuerungsaufwand aus.

Im folgenden wird die Erfindung anhand von Zeichnungen beispielsweise näher erläutert.

FIG 1    zeigt in einem Blockschaltbild ein aus einem Ringleitungssystem gebildetes Datenvermittlungssystem, bei dem die Erfindung angewandt ist,

FIG 2    zeigt in einem Blockschaltbild ausschnittweise den Aufbau einer der in FIG 1 lediglich schematisch dargestellten Schnittstellenschaltungen und den Aufbau einer mit dieser verbundenen Vermittlungseinheit bzw. Leitungsanschlußeinheit,

FIG 3    zeigt den Aufbau einer in der Schnittstellenschaltung gemäß FIG 2 vorhandenen Empfangspuffer-Anordnung,

FIG 4    zeigt den Aufbau einer der Empfangspuffer-Anordnung gemäß FIG 3 zugehörigen Empfangssteuerung und

FIG 5    gibt die Struktur von Signalblöcken wieder, welche über das Ringleitungssystem übertragen werden.

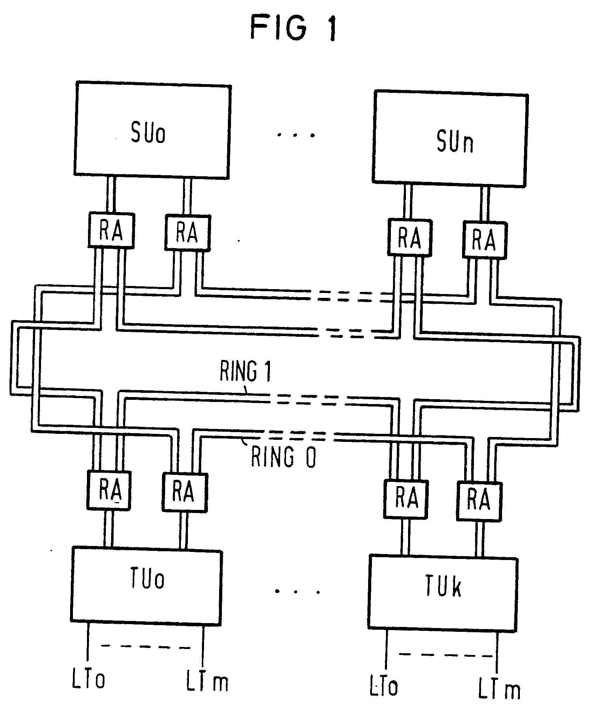

In FIG 1 ist ein Datenvermittlungssystem mit einer Mehrzahl von Vermittlungseinheiten SUO bis SUn dargestellt. Diese Vermittlungseinheiten führen nach dem Lastteilungsprinzip die für die Übertragung von Datensignalen erforderlichen Vermittlungsfunktionen aus. Die Vermittlungseinheiten sind dafür gemeinsam an ein Ringleitungssystem angeschlossen. Ein solches Ringleitungssystem kann aus einer einzigen geschlossen Ringleitungsanordnung bestehen. Ein solches Ringleitungssystem kann jedoch auch, wie in FIG 1 beispielsweise dargestellt, aus zwei parallel verlaufenden, voneinander unabhängigen Ringleitungsanordnungen RING0 und RING1 aufgebaut sein. Durch eine solche Redundanz ist es beispielsweise bei Ausfall einer der Ringleitungsanordnungen möglich, die Übertragung von Signalblöcken und Quittungssignalen auf der jeweils anderen Ringleitungsanordnung auszuführen.

Der Anschluß der genannten Vermittlungseinheiten SU0 bis SUn an die beiden Ringleitungsanordnungen erfolgt jeweils über eine für jede der Ringleitungsanordnungen gesonderte Schnittstellenschaltung RA, auf die im folgenden noch näher eingegangen wird.

Mit den genannten Ringleitungsanordnungen RING0 und RING1 ist außerdem eine Mehrzahl von Leitungsanschlußeinheiten TU0 bis TUk jeweils wieder über eine für jede der Ringleitungsanordnungen gesonderte Schnittstellenschaltung RA verbunden. Diese Leitungsanschlußeinheiten dienen zusammen mit den zugehörigen Schnittstellenschaltungen für die Datensignalübertragung zwischen den genannten Vermittlungseinheiten und mit Teilnehmereinrichtungen verbundenen Übertragungsleitungen, die an die Leitungsanschlußeinheiten TU0 bis TUk angeschlossen sind. Jede der Leitungsanschlußeinheiten weist für einen solchen Anschluß von Übertragungsleitungen eine Mehrzahl von Leitungsanschlüssen LT0 bis Ltm auf.

Die aus den genannten Vermittlungseinheiten bzw. den Leitungsanschlußeinheiten und den zugehörigen Schnittstellenschaltungen gebildeten Schaltungseinheiten werden im folgenden auch als Steuereinrichtungen bezeichnet. Für den Fall, daß das Ringleitungssystem lediglich aus einer einzigen Ringleitungsanordnung besteht, gehört zu einer Steuereinrichtung lediglich eine einzige Schnittstellenschaltung.

Innerhalb des in FIG 1 dargestellten Vermittlungssystems, d. h. zwischen den Vermittlungseinheiten und den Leitungsanschlußeinheiten erfolgt die Übertragung von Datensignalen in Form von Signalblöcken, welche jeweils als Datensignale im Zuge des Aufbaus einer Verbindung Signalisierungsinformationen und bei einer eingerichteten Verbindung die zwischen den in Frage kommenden Teilnehmereinrichtungen zu übertragenden Nachrichtensignale aufweisen. Dabei enthält jeder zu übertragende Signalblock neben den eigentlichen Datensignalen, die jeweils aus einer Mehrzahl von Bits, z. B. 8 Bits, gebildet sind, eine mindestens eine der Steuereinrichtungen als Empfänger bezeichnende Empfängeradresse, eine den Beginn eines Signalblockes bezeichnende Anfangskennung, eine das Ende eines Signalblockes bezeichnende Endekennung, eine die den Signalblock abgebende Steuereinrichtung als Sender bezeichnende Senderadresse und mindestens ein Quittungssignal bzw. eine Leerquittung. Ein derartig aufgebauter Signalblock, auf den im folgenden noch näher eingegangen wird, kann dabei nur dann an eine der Ringleitungsanordnungen abgegeben werden, wenn zuvor von der in Frage kommenden Steuereinrichtung ein von Steuereinrichtung zu Steuereinrichtung übertragenes, diese jeweils in einen Sendeberechtigungszustand steuerndes Sendeberechtigungssignal empfangen wurde.

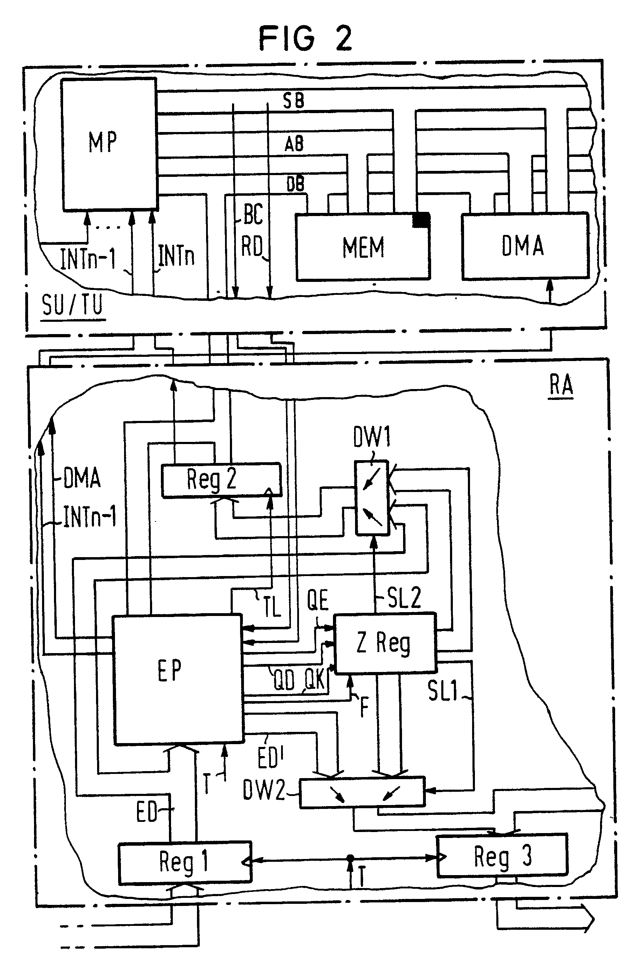

In FIG 2 ist der Aufbau einer Steuereinrichtung detaillierter dargestellt. Wie bereits oben erwähnt, besteht eine solche Steuereinrichtung entweder aus einer Vermittlungseinheit oder aus einer Leitungsanschlußeinheit, in FIG 2 durch die Bezeichnung SU/TU angedeutet, und einer der Anzahl der Ringleitungsanordnungen entsprechenden Anzahl von Schnittstellenschaltungen RA. Dabei ist in FIG 2 lediglich eine dieser Schnittstellenschaltungen gezeigt, da sämtliche mit den Vermittlungseinheiten bzw. Leitungsanschlußeinheiten verbundenen Schnittstellenschaltungen intern den gleichen Aufbau aufweisen.

Die in FIG 2 mit SU/TU bezeichnete, ausschnittweise dargestellte Einheit (Vermittlungseinheit oder Leitungsanschlußeinheit) weist eine sowohl Sende- als auch Empfangsvorgänge steuernde Mikroprozessoranordnung auf. Von dieser Mikroprozessoranordnung sind dargestellt ein Mikroprozessor MP, eine Festwertspeicher (Programmspeicher) und Schreib-/Lese-Speicher umfassende Speicheranordnung MEM und eine Einrichtung für einen direkten Speicherzugriff DMA. Die Speicheranordnung und die zuletzt genannte Einrichtung stehen dabei über ein Busleitungssystem mit dem Mikroprozessor MP in Verbindung. Das Busleitungssystem besteht aus einem Datenbus DB, einem Adressbus AB und einem Steuerbus SB. Über den Datenbus und über die mit RD und BC bezeichneten Leitungen des Steuerbusses steht auch die Schnittstellenschaltung RA mit dem Mikroprozessor MP in Verbindung. Weiterhin führen zwei mit INTn-1 und INTn bezeichnete Steuerleitungen der Schnittstellenschaltung zu Unterbrechungseingängen IN-Tn-1 und INTn des Mikroprozessors MP hin. Schließlich ist die Schnittstellenschaltung RA noch über eine weitere mit DMA bezeichnete Leitung mit der Einrichtung für einen direkten Speicherzugriff DMA verbunden.

Eine Schnittstellenschaltung RA weist sowohl Einrichtungen für die Behandlung empfangener Signalblöcke und Quittungssignale als auch Einrichtungen für das Aussenden von in der zugehörigen Steuereinrichtung bereitstehenden Signalblöcken auf. In FIG 2 sind von diesen Einrichtungen lediglich die auf die vorliegende Erfindung sich beziehenden Einrichtungen für die Behandlung empfangener Signalblöcke und Quittungssignale dargestellt.

Die in FIG 2 dargestellte Schnittstellenschaltung RA weist an der Schnittstelle zu der zugehörigen Ringleitungsanordnung, die beispielsweise die Ringleitungsanordnung RING0 sein möge, ein Empfangsregister Reg1 auf, welches in paralleler Form über die Ringleitungsanordnung übertragene Signale zugeführt erhält. Gesteuert wird dieses Register dazu von einem Taktgenerator her, welcher über eine Leitung T der Übertragungsgeschwindigkeit der Ringleitungsanordnung entsprechende Taktsignale einem Takteingang des Eingangsregisters Reg1 zuführt. Dieses Eingangsregister ist ausgangsseitig über eine Leitungsanordnung ED einerseits mit einer Empfangspuffer-Anordnung EP und andererseits mit ersten Eingängen einer Datenweiche DW1 verbunden. Die Empfangspuffer-Anordnung dient dabei, wie im folgenden noch erläutert werden wird, für die Aufnahme von Signalblöcken und Quittungssignalen sowie für deren Weiterleitung an die im Ringleitungssystem nachfolgende Steuereinrichtung.

Die Empfangspuffer-Anordnung EP steht über den Datenbus DB, die bereits erwähnten Leitungen RD und BC des Steuerbusses SB und über die Leitungen DMA und INTn-1 mit der Einheit SU/TU in Verbindung. Die Empfangspuffer-Anordnung erhält über die bereits erwähnte Leitung T Taktsignale zugeführt und gibt selbst Steuersignale über Leitungen QE, QD, QK und F an ein Zustandsregister ZReg und über eine Leitung TL an einen Takteingang eines als Quittungsempfänger dienenden Registers Reg2 ab. Die Empfangspuffer-Anordnung steht schließlich noch über eine Leitungsanordnung ED' mit ersten Eingängen einer weiteren Datenweiche DW2 in Verbindung.

Zweite Eingänge der gerade erwähnten Datenweiche DW2 und der Datenweiche DW1 sind mit Ausgängen des Zustandsregisters ZReg verbunden. Beide Datenweichen werden dabei von dem Zustandsregister her über die Leitungen SL1 und SL2 gesteuert. Ausgangsseitig ist die Datenweiche DW1 an Signaleingänge des bereits erwähnten Registers Reg2 angeschlossen, welches mit seinen Signalausgängen mit dem Datenbus DB verbunden ist. Die Datenweiche DW2 ist dagegen ausgangsseitig an Signaleingänge eines Ausgangsregisters Reg3 angeschlossen. Dieses Register erhält über die Leitung T Taktsignale zugeführt und gibt an seinen Signalausgängen von der Datenweiche DW2 her zugeführte Signale an die mit der Schnittstellenschaltung RA verbundene Ringleitungsanordnung ab. Die Signaleingänge des Ausgangsregisters stehen im übrigen auch noch mit Einrichtungen für das Aussenden von in der zugehörigen Steuereinrichtung bereitstehenden Signalblöcken in Verbindung. Wie jedoch bereits erwähnt, wird auf den Aufbau dieser Einrichtungen nicht näher eingegangen.

Im folgenden wird nun zunächst das Zusammenwirken der in FIG 2 dargestellten Schaltungsteile bei der Aufnahme und Weiterleitung von Signalblöcken und Quittungssignalen erläutert, ehe auf den Aufbau der Empfangspuffer-Anordnung EP näher eingegangen wird.

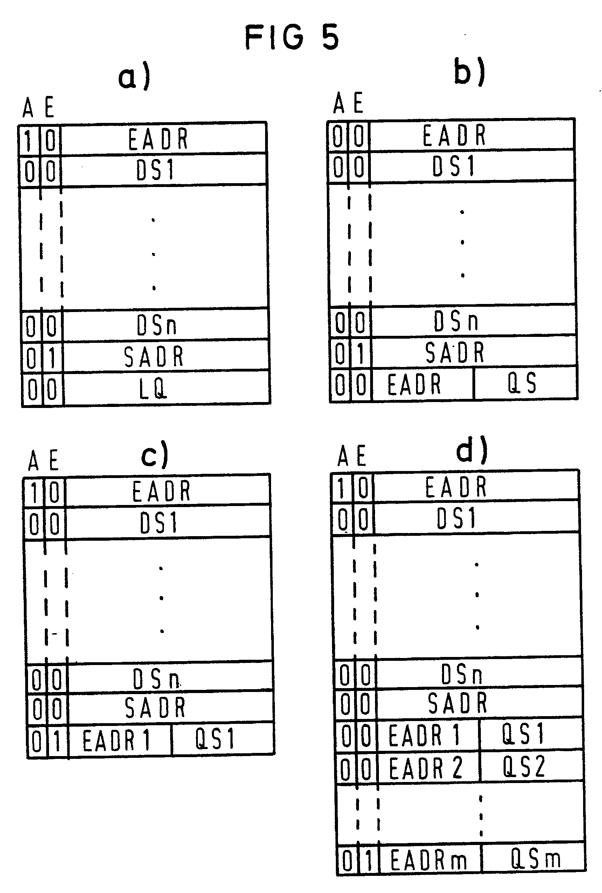

Innerhalb des Ringleitungssystems können Datensignale wahlweise an eine einzige als Empfänger ausgewählte Steuereinrichtung oder an eine Gruppe von Steuereinrichtungen übertragen werden. Es wird dabei zunächst davon ausgegangen, daß Datensignale von einer Steuereinrichtung des Ringleitungssystems her lediglich an eine einzige Steuereinrichtung zu übertragen sind. Für diese Übertragung stellt die Steuereinrichtung, von der die Datensignale abzugeben sind, die Datensignale in der zugehörigen Einheit SU/TU zu einem Signalblock zusammen. Ein derartiger Signalblock ist in FIG 5a schematisch dargestellt. Er wird durch eine die als Empfänger ausgewählte Steuereinrichtung bezeichnende Empfängeradresse EADR eingeleitet. Dieser Empfängeradresse folgen die zu übertragenden Datensignale DS1 bis DSn. Angefügt ist diesen Datensignalen eine diesen Signalblock sendende Steuereinrichtung als Sender bezeichnende Senderadresse SADR. Der Signalblock wird schließlich durch eine vom Sender vorbereitete Leerquittung LQ abgeschlossen. Den genannten Signalen eines Signalblockes sind jeweils u. a. zwei Kennbits beigefügt. Ein erstes, in FIG 5 mit A bezeichnetes Kennbit dient zur Kennzeichnung des Anfangs eines Signalblockes. In entsprechender Weise dient das mit E bezeichnete Kennbit zur Kennzeichnung des Endes eines Signalblockes. Der Anfang und das Ende eines Signalblockes mögen dabei beispielsweise durch den logischen Zustand "1" des jeweiligen Kennbits angezeigt werden. Der logische Zustand "1" des Kennbits A wird im folgenden als Blockanfangskennung und der logische Zustand "1" des Kennbits E als Blockendekennung bezeichnet. Wie in FIG 5a dargestellt, wird die Blockanfangskennung zusammen mit der Empfängeradresse und die Blockendekennung zusammen mit der Senderadresse übertragen.

Ein in der gerade beschriebenen Weise zusammengestellter Signalblock wird anschließend bei Eintreffen eines von Steuereinrichtung zu Steuereinrichtung übertragenen, diese jeweils in einen Sendeberechtigungszustand steuernden Sendeberechtigungssignals von der Einheit SU/TU (FIG 2) her über das Ausgangsregister Reg3 an die mit der Schnittstellenschaltung RA verbundene Ringleitungsanordnung abgegeben. Jede der mit der Ringleitungsanordnung verbundenen Schnittstellenschaltungen nimmt die zu dem übertragenen Signalblock gehörenden Signale über das Eingangsregister Reg1 auf. Dabei wird zunächst mit Hilfe der der jeweiligen Steuereinrichtung zugehörigen Empfangspuffer-Anordnung EP ein Vergleich der in dem Signalblock zusammen mit der Blockanfangskennung übertragenen Empfängeradresse mit der der jeweiligen Steuereinrichtung innerhalb des Ringleitungssystems zugewiesenen Adresse durchgeführt. Ergibt der Vergleich keine Übereinstimmung der miteinander verglichenen Adressen, so leitet die jeweilige Empfangspuffer-Anordnung EP den empfangenen Signalblock unverändert über die Leitungsanordnung ED' an die Datenweiche DW2 weiter. Über diese und das Ausgangsregister Reg3 gelangt dann der Signalblock wieder auf die Ringleitungsanordnung.

Ergibt dagegen der Adressenvergleich eine Übereinstimmung der miteinander verglichenen Adressen, so wird der gerade empfangene Signalblock in der Empfangspuffer-Anordnung EP kopiert. Der Signalblock selbst wird unter Löschung der Blockanfangskennung (A) über die Leitungsanordnung ED' an die im Ringleitungssystem folgende Steuereinrichtung weitergeleitet. Bei diesem Weiterleiten fügt das Zustandsregister ZReg an die Senderadresse (SADR) noch ein Quittungssignal (EADR, QS) an, so daß die ursprünglich in dem Signalblock enthaltene Leerquittung (LQ) überschrieben wird. Für dieses Anfügen erhält das Zustandsregister ZReg von der Empfangspuffer-Anordnung EP, die das Auftreten der Blockendekennung (E) und der Senderadresse (SADR) überwacht, ein Steuersignal über die Leitung QE zugeführt. Der weitergeleitete Signalblock ist in FIG 5b dargestellt.

Nach dem erwähnten Kopieren eines Signalblockes gibt die Empfangspuffer-Anordnung EP ein das Bereitstehen eines empfangenen Signalblockes anzeigendes Steuersignal über die Leitung DMA an die Einrichtung für einen direkten Speicherzugriff DMA ab. Diese Einrichtung bewirkt dann die Übernahme des betreffenden Signalblockes in die Einheit SU/TU. Das Ende des Signalblockes wird dabei dem Mikroprozessor MP durch ein Unterbrechungssignal an seinem Unterbrechungseingang INTn-1 von der Empfangspuffer-Anordnung EP her angezeigt.

Da die ursprünglich in dem Signalblock übertragene Blockanfangskennung (A) bei dessen Weiterleitung gelöscht ist, wird der Signalblock als solcher nicht mehr erkannt, so daß er von nachfolgenden Steuereinrichtungen nicht aufgenommen werden kann. Lediglich die zusammen mit der Blockendekennung (E) übertragene Senderadresse (SADR) ist noch als solche erkennbar. Das Auftreten von Blockendekennung und Senderadresse wird in der Steuereinrichtung, von der der gerade quittierte Signalblock zuvor abgegeben worden ist, überwacht, und zwar in der zugehörigen Empfangspuffer-Anordnung EP. Wird das Auftreten von Blockendekennung und Senderadresse von dieser erkannt, so gibt sie über die Leitung TL ein Steuersignal an das zugehörige Quittungsregister Reg2 ab, das daraufhin das nach der Senderadresse übertragene Quittungssignal QS von der Leitungsanordnung ED über die Datenweiche DW1 aufnimmt. Auf die Aufnahme eines solchen Quittungssignals hin gibt das Quittungsregister ein Unterbrechungssignal über die Leitung INTn an den Mikroprozessor MP ab. Dieser übernimmt dann aufgrund dieses Signals das in dem Quittungsregister bereitstehende Quittungssignal für eine Auswertung. Damit ist ein Sendevorgang abgeschlossen.

Es wird nun noch der Fall betrachtet, daß ein Signalblock an eine Gruppe von Steuereinrichtungen zu übertragen ist. Auch dafür wird zunächst in der den Signalblock abgebenden Steuereinrichtung ein Signalblock in der in FIG 5a dargestellten Weise zusammengestellt und an die Ringleitungsanordnung abgegeben. Ein Unterschied besteht lediglich darin, daß durch die Empfängeradresse (EADR) nunmehr eine Gruppe von Steuereinrichtungen bezeichnet ist. Dabei kann eine Gruppe wahlweise sämtliche zu der Ringleitungsanordnung gehörenden Steuereinrichtungen oder lediglich einen Teil dieser Steuereinrichtungen umfassen.

Mit der Abgabe des Signalblockes an die Ringleitungsanordnung gibt der Mikroprozessor MP der betreffenden Steuereinrichtung im übrigen noch ein Rundsendesignal BC über die gleichbezeichnete Leitung an die Empfangspuffer-Anordnung EP ab. Mit diesem Rundsendesignal wird angezeigt, daß ein Signalblock an eine Gruppe von Steuereinrichtungen abgegeben worden ist.

Die Übertragung des Signalblockes erfolgt wieder in der dargestellten Weise von Steuereinrichtung zu Steuereinrichtung. Nicht durch die Empfängeradresse bezeichnete Steuereinrichtungen leiten dabei den empfangenen Signalblock unverändert weiter. Die erste zu der durch die Empfängeradresse bezeichnete Gruppe gehörende Steuereinrichtung kopiert dagegen den empfangenen Signalblock in der zugehörigen Empfangspuffer-Anordnung EP. Der Signalblock selbst wird unter Weglassen der bisherigen Blockendekennung (E) an die in der Ringleitungsanordnung folgende Steuereinrichtung weitergeleitet. Bei diesem Weiterleiten fügt das Zustandsregister ZReg auf ein von der Empfangspuffer-Anordnung abgegebenes Steuersignal hin, welches über die Leitung QK übertragen wird, noch eine Quittungsinformation zusammen mit einer Blockendekennung an die Senderadresse (SADR) an. Die Quittungsinformation besteht dabei aus der der betreffenden Steuereinrichtung innerhalb der Ringleitungsanordnung zugewiesenen Adresse (EADR1) und dem eigentlichen, den Empfang des Signalblockes betreffenden Quittungssignal (QS1). Der von der ersten zu der Gruppe gehörenden Steuereinrichtung abgegebene Signalblock ist in FIG 5c dargestellt. Für das gerade erwähnte Anfügen der · Quittungsinformation und der Blockendekennung wird im übrigen die in FIG 2 dargestellte Datenweiche DW2 über die Leitung SL1 von dem Zustandsregister ZReg her entsprechend gesteuert.

Auch in den weiteren zu der Gruppe gehörenden Steuereinrichtungen wird der empfangene Signalblock kopiert und unter Weglassen der bisherigen Blockendekennung an die im Ringleitungssystem folgende Steuereinrichtung weitergeleitet. Dabei wird jeweils wieder eine Quittungsinformation und eine Blockendekennung an die bisher letzte in dem Signalblock übertragene Quittungsinformation angefügt.Der von der m-ten zu der Gruppe gehörenden Steuereinrichtung abgegebene Signalblock ist in FIG 5d dargestellt. Daraus ergibt sich, daß der Signalblock, den die letzte zu der Gruppe gehörende Steuereinrichtung abgibt, Quittungsinformationen für sämtliche zu der Gruppe gehörenden Steuereinrichtungen aufweist.

Der die Quittungssignale sämtlicher zu der Gruppe gehörenden Steuereinrichtungen enthaltende Signalblock wird in diejenige Steuereinrichtung übernommen, von der der ursprüngliche Signalblock abgegeben worden ist. Diese Übernahme kann wiederum in Form eines Kopiervorganges in der zugehörigen Empfangspuffer-Anordnung EP erfolgen, der mit der ursprünglichen Abgabe des Signalblockes ein Rundsendesignal BC zugeführt worden ist. Eingeleitet wird dabei der Kopiervorgang auf das Auftreten der Blockanfangskennung zusammen mit dem Rundsendesignal hin. Der Signalblock selbst wird unter Löschung sowohl der Blockanfangskennung als auch der Blockendekennung über das Ausgangsregister Reg3 wieder an die zugehörige Ringleitungsanordnung abgegeben. Da beide Kennungen nunmehr gelöscht sind, kann der weitergeleitete Signalblock durch die in der Ringleitungsanordnung nachfolgenden Steuereinrichtungen nicht mehr erkannt werden.

Nach dem Kopieren des Signalblockes einschließlich der Quittungsinformationen, d. h. bei Auftreten der diesem Signalblock zugehörigen Blockendekennung, gibt die Empfangspuffer-Anordnung EP über die Leitung QD ein Steuersignal an das zugehörige Zustandsregister ZReg ab. Dieses Zustandsregister stellt daraufhin ein den Empfang dieses Signalblockes betreffendes Quittungssignal bereit, welches über die Datenweiche DW1 in das Quittungsregister Reg2 übernommen wird. Für diese Übernahe erhält das Quittungsregister von der Empfangspuffer-Anordnung über die Leitung TL ein entsprechendes Steuersignal zugeführt. Außerdem wird für diese Übernahme die Datenweiche DW1 von dem Zustandsregister ZReg her über die Leitung SL2 entsprechend gesteuert.

Die Übernahme des in das Quittungsregister Reg2 übertragenen Quittungssignals und des in der Empfangspuffer-Anordnung EP sich befindenden Signalblockes in die Einheit SU/TU erfolgt wieder in der bereits oben angegebenen Weise. Nach dieser Übernahme erfolgt in der Einheit SU/TU eine Auswertung sämtlicher übernommenen Quittungssignale. Außerdem wird das von der zugehörigen Steuereinrichtung empfangene Sendeberechtigungssignal an die in der Ringleitungsanordnung folgende Steuereinrichtung weitergeleitet.

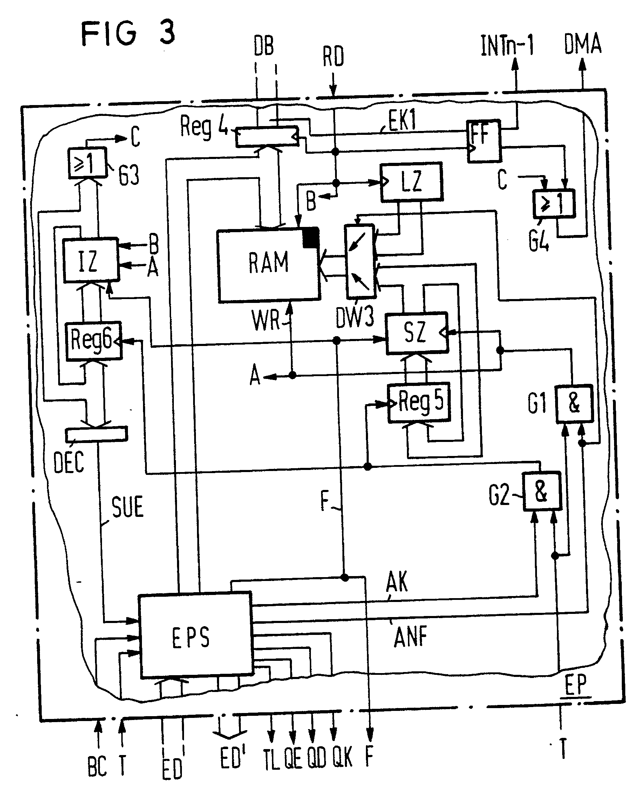

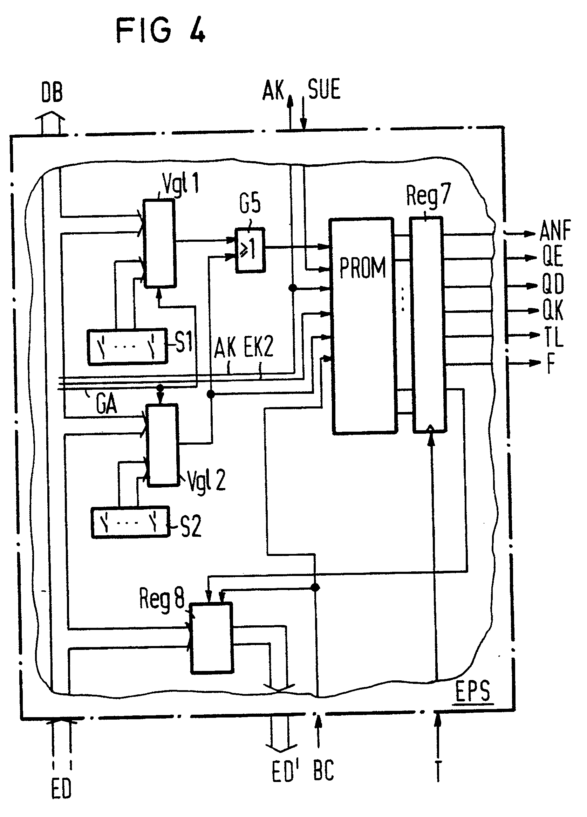

Im folgenden wird nun noch unter Bezugnahme auf die Figuren 3 und 4 auf den Aufbau der in FIG 2 mit EP bezeichneten Empfangspuffer-Anordnung näher eingegangen. Wie in FIG 3 dargestellt, enthält die Empfangspuffer-Anordnung einen Schreib-/Lese-Speicher RAM mit einer Mehrzahl von Speicherzellen für die Aufnahme von Signalblöcken einschließlich der jeweils zugehörigen Blockendekennungen. Dieser Speicher ist mit seinen Datensignalein-/Ausgängen einerseits für die Aufnahme von Signalblöcken mit der in FIG 2 bereits dargestellten Leitungsanordnung ED und andererseits für eine Abgabe von Signalblöcken über ein Register Reg4 mit dem ebenfalls bereits in FIG 2 bereitgestellten Datenbus DB verbunden. Für die Abgabe eines Signalblockes erhält er dabei Lesetakte über die zu dem Steuerbus SB gehörende Leitung RD zugeführt. Diese Lesetakte entsprechen der Arbeitsgeschwindigkeit der jeweiligen Steuereinrichtung.

Für die Aufnahme von Signalblöcken erhält der Schreib-/Lese-Speicher RAM dagegen an einem Eingang WR Schreibtakte zugeführt. Diese Schreibtakte treten auf der Leitung T auf und werden über ein UND-Glied G1 an den genannten Eingang des Speichers abgegeben. Dieses UND-Glied wird durch ein auf einer Leitung ANF auftretendes Steuersignal in den übertragungsfähigen Zustand gesteuert. Abgegeben wird dieses Steuersignal dabei von einer Empfangssteuerung EPS her.

Der Schreib-/Lese-Speicher ist mit seinen Adresseneingängen über eine Datenweiche DW3 zum einen mit einem Zähler LZ und zum anderen mit einem Zähler SZ verbunden. Der als Schreibzähler dienende Zähler SZ ist mit seinem Takteingang an den Ausgang des bereits erwähnten UND-Gliedes G1 angeschlossen, d. h. er erhält gleichzeitig mit dem Schreib-/Lese-Speicher RAM die Schreibtakte zugeführt. Seine nach Maßgabe dieser Schreibtakte sich ändernde Zählerstände gibt der Zähler SZ bei Aufnahme eines Signalblockes an seinen Zählerausgängen als Adressensignale für den Schreib-/Lese-Speicher ab. Diese Zählerausgänge stehen außerdem mit einem Register Reg5 in Verbindung, welches über ein UND-Glied G2 ein Übernahmetakt zugeführt erhält. Dieses UND-Glied ist eingangsseitig mit der Leitung T und einer an die Empfangssteuerung EPS angeschlossenen Leitung AK verbunden. Ausgangsseitig steht das Register Reg5 mit Setzeingängen des Zähler SZ in Verbindung. Diese Setzeingänge werden durch ein auf einer Leitung F auftretendes, von der Empfangssteuerung EPS abgegebenes Setzsignal freigegeben.

Der Zähler LZ dient als Lesezähler. Er erhält die auf der Leitung RD auftretenden Lesetakte an seinem Takteingang zugeführt und gibt seinen nach Maßgabe dieser Lesetakte sich ändernde Zählerstände als Adressensignale beim Auslesen eines Signalblockes an den Schreib-/Lese-Speicher RAM ab.

Die mit den beiden genannten Zählern verbundene Datenweiche DW3 ist im übrigen mit ihrem Steuereingang ebenfalls mit der Leitung ANF verbunden.

Die Empfangspuffer-Anordnung EP weist einen weiteren Zähler IZ auf. Bei diesem Zähler handelt es sich um einen Vor-/Rückwärtszähler, welcher für das Zählen in der einnen Richtung vom Ausgang des UND-Gliedes G1 her Schreibtakte und für das Zählen in der anderen Richtung die auf der Leitung RD auftretenden Lesetakte zugeführt erhält. Ausgangsseitig ist der Zähler IZ mit Eingängen eines Decodierers DEC verbunden, welcher bei einem bestimmten Zählerstand des Zählers IZ über eine Leitung SUE ein Meldesignal an die Empfangssteuerung EPS abgibt.

Der Zähler IZ ist ausgangsseitig außerdem mit einem Register Reg6 und mit einem ODER-Glied G3 verbunden. Das Register Reg6 erhält an einem Takteingang von dem UND-Glied G2 her ein Übernahmetakt zugeführt. Ausgangsseitig ist dieses Register mit Setzeingängen des Zählers IZ verbunden, die wieder durch ein auf der Leitung F auftretendes Setzsignal freigegeben werden.

Der Ausgang des zuvor genannten ODER-Gliedes G3 ist mit ersten Eingängen eines ODER-Gliedes G4 verbunden. Mit einem weiteren Eingang ist dieses ODER-Glied an den negierenden Ausgang einer Kippstufe FF angeschlossen. Der Ausgang des ODER-Gliedes G4 ist mit der Leitung DMA verbunden. Der nichtnegierende Ausgang der Kippstufe FF ist dagegen an die Leitung INTn-1 angeschlossen. Der Takteingang dieser Kippstufe erhält die auf der Leitung RD auftretenden Lesetakte zugeführt. Der Dateneingang der Kippstufe ist dagegen mit der die Blockendekennung führenden Leitung EK des Datenbusses DB verbunden.

Die bereits erwähnte Empfangssteuerung EPS steht mit einer Mehrzahl der in FIG 2 angegebenen Leitungen in Verbindung. Eingangsseitig sind dies die Leitungsanordnung ED sowie die Leitungen BC und T. Ausgangsseitig besteht eine Verbindung einerseits zu der Leitungsanordnung ED' und andererseits zu den Leitungen TL, QE, QD, QK und F.

In der in FIG 3 dargestellten Empfangspuffer-Anordnung EP laufen folgende Steuerungsvorgänge ab. Bei Auftreten einer Blockanfangskennung zusammen mit einer die zugehörige Steuereinrichtung bezeichnenden Empfängeradresse gibt die Empfangssteuerung EPS ein Steuersignal über die Leitung ANF ab. Aufgrund des Steuersignals werden dem Schreib-/Lese-Speicher RAM sowie den beiden Zählern SZ und IZ Schreibimpulse für die Aufnahme eines empfangenen Signalblockes über das UND-Glied G1 zugeführt. Beide Zähler mögen sich dabei zunächst in einem Grundzählerstand befinden, der beispielsweise der Zählerstand "0" sein möge. Mit jedem Schreibtakt wird dann der Zählerstand verändert, wobei mit dem sich ändernden momentanen Zählerstand des Zähler SZ die Speicherzellen des Schreib-/Lese-Speichers RAM fortlaufend adressiert werden, während der momentane Zählerstand des Zählers IZ dem momentanen Füllstand des Schreib-/Lese-Speichers entspricht. Die Aufnahme von zu einem Signalblock gehörenden Signale erfolgt nun so lange, bis mit dem Auftreten der zu dem Signalblock gehörenden Blockendekennung von der Empfangssteuerung EPS her ein das UND-Glied G1 sperrendes Steuersignal über die Leitung ANF übertragen wird, so daß die weitere Abgabe von Schreibtakten verhindert wird. Der zu diesem Zeitpunkt von den beiden Zählern SZ und IZ gerade abgegebene momentane Zählerstand bleibt dabei erhalten.

Wie bereits in Verbindung mit der FIG 2 erläutert wurde, wird das Vorliegen eines empfangenen Signalblockes der Einheit SU/TU durch ein über die Leitung DMA übertragene Steuersignal angezeigt. Der in dem Schreib-/Lese-Speicher sich befindende Signalblock wird daraufhin durch Zuführen von Lesetakten über die Leitung RD und fortlaufende Adressierung der Speicherzellen des Schreib-/Lese-Speichers von dem Zähler LZ her durch einen direkten Speicherzugriff über das Register Reg4 in die Einheit SU/TU übernommen, und zwar bis zum Auftreten der im gerade ausgelesenen Signalblock enthaltenen Blockendekennung. Diese Blockendekennung tritt auf der Leitung EK1 des Datenbusses DB auf. Dieses Auftreten überführt die Kippstufe FF in ihren aktiven Zustand, in welchem sie dem Mikroprozessor das Ende eines Signalblockes über die Leitung INTn-1 signalisiert. Der Mikroprozessor unterbricht daraufhin die Zuführung von weiteren Lesetakten. Außerdem wird durch die Kippstufe FF das über die Leitung DMA übertragene Steuersignal für einen direkten Speicherzugriff unterbrochen.

Der Zähler LZ möge im übrigen auch zunächst von einem vorgegebenen Grundzählerstand aus zu zählen beginnen, der ebenfalls der Zählerstand "0" sein möge. Der dann bei Auftreten der Blockendekennung von dem Zähler LZ gerade abgegebene momentane Zählerstand bleibt bis zur Einleitung eines weiteren Lesevorganges erhalten.

Bei Auslesen eines Signalblockes aus dem Schreib-/Lese-Speicher RAM werden die Lesetakte außerdem dem Zähler IZ zugeführt. Diese Lesetakte bewirken ein Zählen in Rückwärtsrichtung, so daß sich mit jedem Lesetakt der momentane Zählerstand dieses Zählers verringert. Damit entspricht der momentane Zählerstand der Anzahl der Signale des Signalblockes, die noch nicht aus dem Schreib-/Lese-Speicher ausgelesen worden sind. Bei Erreichen des Zählerstandes "0", welcher den Leerzustand des Schreib-/Lese-Speichers anzeigt, wird das ODER-Glied G4 gesperrt, so daß die Zuführung des über die Leitung DMA übertragenen Steuersignals unterbrochen wird.

Werden nun weitere Signalblöcke empfangen, so laufen ebenfalls wieder die bereits erläuterten Steuerungsvorgänge ab. Ein Unterschied besteht lediglich darin, daß nunmehr die Zähler SZ, LZ und IZ von ihren noch anstehenden Zählerständen aus weiterzählen. Mit anderen Worten, die Anfangszählerstände dieser Zähler entsprechen nun den bei der Übernahme bzw. beim Auslesen von Signalblöcken zuletzt erreichten Zählerständen. Das erneute Einschreiben von Signalblöcken in den Schreib-/Lese-Speicher kann im übrigen auch bereits zu einem Zeitpunkt erfolgen, zu dem zuvor empfangene Signalblöcke noch nicht oder noch nicht vollständig in die Einheit SU/TU übernommen werden konnten. In diesem Fall hat die Aufnahme eines gerade empfangenen Signalblockes Vorrang vor dem Auslesen zuvor empfangener Signalblöcke. Bei der Aufnahme von Signalblöcken verändert im übrigen der Zähler IZ seinen Zählerstand entsprechend der Anzahl der durch Signale der Signalblöcke belegten und noch nicht ausgelesenen Speicherzellen des Schreib-/Lese-Speichers RAM.

Bei Empfang eines Signalblockes wird im übrigen auf das Auftreten der mit diesem übertragenen Blockanfangskennung hin durch ein über die Leitung AK übertragenes Signal ein Übernahmetakt über das UND-Glied G2 an die beiden Register REG5 und Reg6 abgegeben. Diese übernehmen daraufhin jeweils den noch von ihrem zugehörigen Zähler als Anfangszählerstand für eine weitere Aufnahme von Signalblöcken abgegebenen momentanen Zählerstand.

Wird aufgrund der Aufnahme von Signalblöcken in den Schreib-/Lese-Speicher RAM und einer noch nicht erfolgten Übernahme in die Einheit SU/TU ein vorgegebener Zählerstand, welcher den maximalen Füllstand des Schreib-Lese-Speichers anzeigt, erreicht, so wird von dem Decodierer DEC her ein Meldesignal an die Empfangssteuerung EPS abgegeben, die daraufhin über die Leitung F ein Setzsignal für die Freigabe der Setzeingänge der Zähler SZ und IZ überträgt. Damit werden die in die Register Reg5 und Reg6 zu Beginn des gerade empfangenen Signalblockes übertragenen Anfangszählerstände in die Zähler SZ und IZ übernommen, d.h. die Speicherzellen des Schreib-/Speichers RAM, die bereits durch Signale des nicht vollständig aufnehmbaren Signalblockes belegt worden sind, werden wieder freigegeben. Außerdem wird die Aufnahme des gerade empfangenen Signalblockes in den Schreib-/Lese-Speicher beendet. Dies erfolgt durch Sperren des UND-Gliedes G1 aufgrund eines über die Leitung ANF übertragenen Steuersignals. Die nicht vollständige Aufnahme eines Signalblockes wird im übrigen auch über die Leitung F dem in Figur 2 dargestellten Zustandsregister ZReg signalisiert, das daraufhin an die mit dem gerade empfangenen Signalblock übertragene Senderadresse ein entsprechendes Quittungssignal anfügt.

In Figur 4 ist der Aufbau der Empfangssteuerung EPS dargestellt. Diese enthält zwei Vergleicheranordnungen Vg11 und Vg12 für den Vergleich der in einem Signalblock zusammen mit der Blockanfangskenrung übertragenen Empfängeraddresse bzw. der zusammen mit einem Quittungssignal übertragenen Senderadresse mit einer der zugehörigen Steuereinrichtung innerhalb der Ringleitungsanordnung zugewiesenen Adresse. Die Vergleicheranordnung Vg11 dient dabei für einen Adressenvergleich bei Empfang eines lediglich für eine der Steuereinrichtungen bestimmten Signalblockes und bei Empfang eines Quittungssignals. Die Vergleicheranordnung VGL2 dient dagegen für den Adressenvergleich bei Empfang eines für eine Gruppe von Steuereinrichtungen bestimmten Signalblockes. Die für den jeweiligen Vergleich heranzuziehende Vergleichsadresse wird von einer mit der Vergleicheranordnung Vg11 bzw. Vg12 verbundenen, als Schalteranordnung dargestellten Anordnung S1 bzw. S2 bereitgestellt. Bei diesen Anordnungen kann es sich dabei um beliebige Speichereinrichtungen handeln. Die für einen Adressenvergleich jeweils heranzuziehende Vergleicheranordnung wird im übrigen durch ein Signal auf der Leitung GA gesteuert. Dieses Signal ist Bestandteil der eine Gruppe von Steuereinrichtungen bezeichnenden Empfängeradresse und bezeichnet diese als solche.

Die Ausgänge der beiden Vergleicheranordnungen sind über ein ODER-Glied G5 mit einem der Adresseneingänge eines Festwertspeichers PROM verbunden. Weitere Adresseneingänge dieses Speichers stehen mit einer die Blockanfangskennung führenden Leitung AK, einer die Blockendekennung führenden Leitung EK2, den Leitungen SUE, BC und mit dem Ausgang der Vergleicheranordnung Vg12 in Verbindung. Die beiden Leitungen AK und EK2 sind dabei der Leitungsanordnung ED zugehörig.

Der Festwertspeicher PROM weist eine Mehrzahl von Speicherplätzen auf, in welchen sämtliche Steuersignale für die Behandlung von empfangenen Signalblöcken und Quittungssignalen gespeichert sind. Mit seinen Datenausgängen ist dieser Festwertspeicher mit einem Register Reg7 verbunden. Dieses Register steht über Datenausgänge mit den bereits in Figur 2 dargestellten Leitungen ANF, QE, QD, QK, TL und F in Verbindung. Ein Datenausgang ist außerdem noch an einen ersten Steuereingang eines Registers Reg8 angeschlossen. Mit einem Takteingang ist das Register Reg7 schließlich noch mit der Leitung T verbunden.

Ein zweiter Steuereingang des Registers Reg8 ist mit der in Figur 2 bereits dargestellten Leitung BC verbunden. Eingangsseitig steht dieses Register mit der Leitungsanordnung ED und ausgangsseitig mit der Leitungsanordnung ED' in Verbindung.

Je nach den Signalen, die der Festwertspeicher PROM gerade an seinen Adresseneingängen zugeführt erhält, gibt er ein diesen Signalen entsprechendes Steuersignal ab, welches von dem Register Reg7 übernommen und an die in Frage kommende Leitung abgegeben wird. Die Wirkung der auf den Leitungen ANF, QE QD, QK, TL und F auftretenden Steuersignale ist bereits unter Bezugnahme auf die Figur 2 erläutert worden.

Über das Register Reg8 wird jeder der von der zugehörigen Steuereinrichtung empfangenen Signalblöcke an die in der Ringleitungsanordnung nachfolgende Steuereinrichtung weitergeleitet. Bei diesem Weiterleiten erfolgt gegebenenfalls eine Behandlung des betreffenden Signalblockes hinsichtlich der in ihm enthaltenen Blockanfangskennung und Blockendekennung. Die Behandlung besteht dabei, wie bereits oben erwähnt, darin, daß, abhängig von der Art des gerade weiterzuleitenden Signalblockes, die Blockanfangskennung, die Blockendekennung oder beide Kennungen gelöscht werden.

**Ansprüche**

1. Verfahren zum Übertragen von Datensignalen zwischen über ein taktgesteuertes, richtungsabhängig betriebenes Ringleitungssystem (RINGO, RINGI) miteinander verbundenen Steuereinrichtungen (SUO, SA;...;SUn, RA; TUO, RA;...; TUm, RA), die insbesondere durch Steuereinrichtungen eines Datenvermittlungssystems gebildet sind, wobei von einer Steuereinrichtung her an eine weitere Steuereinrichtung abzugebende Datensignale (DS1 bis DSn) abschnittweise von Steuereinrichtung zu Steuereinrichtung in Form eines durch eine Blockanfangskennung (A) und eine Blockendekennung (E) gekennzeichneten Signalblockes zusammen mit einer eine der Steuereinrichtungen als Empfänger bezeichnenden, den Datensignalen vorangestellten Empfängeradresse (EADR), mit einer die den Signalblock abgebenden Steuereinrichtung als Sender bezeichnenden Senderadresse (SADR) und mit einer Leerquittung (LQ) übertragen werden, wobei in der durch die Empfängeradresse bezeichneten Steuereinrichtung auf das Auftreten der Blockanfangskennung (A) und der Empfängeradresse (EADR) hin der gerade empfangene Signalblock für eine mögliche Verarbeitung kopiert und der Signalblock selbst unter Ersetzen der Leerquittung (LQ) durch ein Quittungssignal (QS) an die im Ringleitungssystem folgende Steuereinrichtung weitergeleitet wird und wobei bei diesem Weiterleiten von der durch die Senderadresse (SADR) bezeichneten Steuereinrichtung das Quittungssignal (QS) für eine Auswertung übernommen wird, **dadurch gekennzeichet,** daß ein Signalblock in eine Mehrzahl von Wörtern mit jeweils einer festgelegten Anzahl von Bits unterteilt wird, daß jedem der Wörter zwei Kennbits (A, E) beigefügt werden, daß ein erstes der Kennbits (A) lediglich bei dem die Empfängeradresse führenden Wort als Blockanfangskennung auf einen festgelegten logischen Pegel ("1") gesetzt wird,

daß das die Senderadresse führende Wort vor dem die Leerquittung (LQ) führenden Wort am Ende des Signalblockes übertragen und dabei in dem die Senderadresse führenden Wort das zweite der Kennbits (E) als Blockendekennung auf den festgelegten Pegel ("1") gesetzt wird, daß bei der Übertragung eines derartigen Signalblockes von der durch die Empfängeradresse (EADR) bezeichneten Steuereinrichtung mit dem Kopieren des betreffenden Signalblockes dieser selbst unter Rücksetzen des bis dahin als Blockanfangskennung gesetzten ersten Kennbits und unter Ersetzen der Leerquittung (LQ) durch das Quittungssignal (QS) weitergeleitet wird und daß in der Steuereinrichtung, von der zuvor der betreffende Signalblock abgegeben worden ist, lediglich das Auftreten des die Senderadresse führenden Wortes mit gesetztem zweiten Kennbit für eine Übernahme des diesem Wort nachfolgenden, das Quittungssignal (QS) führenden Wortes überwacht wird.

2. Schaltungsanordnung zur Durchführung des Verfahrens nach Anspruch 1, **dadurch gekennzeichnet,** daß jede der Steuereinrichtungen eine EmpfängerAnordnung (EP, Reg3) aufweist, welcher ein Empfangsspeicher (EP) für die Aufnahme mindestens eines für die zugehörige Steuereinrichtung bestimmten Signalblockes und ein Quittungsempfänger (Reg3) für die Aufnahme eines Quittungssignals zugehörig ist, daß mit dem Empfangsspeicher eine Empfangssteuerung (EPS, ZReg) verbunden ist, welche auf das Auftreten einer Blockanfangskennung (A) und einer der jeweiligen Steuereinrichtung zugewiesenen Adresse entsprechenden Empfängeradresse (EADR) hin einerseits das Kopieren des gerade empfangenen Signalblockes in den Empfangsspeicher (EP) und andererseits das Weiterleiten des Signalblockes an die im Ringleitungssystem folgende Steuereinrichtung unter Löschen der Blockanfangskennung (A) und Anfügen eines Quittungssignals (QS) an die Senderadresse (SADR) steuert, und daß die Empfangssteuerung (EPS, ZReg) auf das Auftreten der Blockendekennung (E) in Verbindung mit einer der zugehörigen Steuereinrichtung zugewiesenen Adresse-entsprechenden Senderadresse (SADR) hin die Übernahme des zusammen mit dieser Senderadresse übertragenen Quittungssignals in den Quittungsempfänger (Reg3) bewirkt.

3. Schaltungsanordnung nach Anspruch 2, **dadurch gekennzeichnet,** daß des Empfangsspeicher (EP) einen Schreib-/Lese-Speicher (RAM) mit einer Mehrzahl von Speicherzellen für die Aufnahme mindestens eines Signalblockes einschließlich der zugehörigen Blockendekennung (E) aufweist, daß mit dem Schreib-/Lese-Speicher eine erste Zähleranordnung (SZ, Reg5) verbunden ist, welche die genannten Speicherzellen für die Aufnahme eines empfangenen Signalblockes, ausgehend von einem vorgegebenen Anfangszählerstand, nach Maßgabe eines mit einem der Übertragungsgeschwindigkeit des Ringleitungssystems entsprechenden Schreibtakt sich ändernden Zählerstandes fortlaufend bis zum Auftreten der Blockendekennung adressiert, und daß eine zweite Zähleranordnung (LZ) vorgesehen ist, welche, ausgehend von einem vorgegebenen Anfangszählerstand, durch eine mit einem der Arbeitsgeschwindigkeit der jeweiligen Steuereinrichtung entsprechenden Lesetakt fortschreitende Veränderung ihres Zählerstandes ein Auslesen eines in den Speicherzellen des Schreib-/Lese-Speichers (RAM) gespeicherten Signalblockes bis zum Auftreten der in diesem enthaltenen Blockendekennung (E) ermöglicht.

4. Schaltungsanordnung nach Anspruch 3, **dadurch gekennzeichnet,** daß die Speicherzellen des Schreib-/Lese-Speichers (RAM) für die Aufnahme bzw. Abgabe aufeinanderfolgender Signalblöcke von der ersten Zähleranordnung (SZ, Reg5) bzw. der zweiten Zähleranordnung (LZ) her umlaufend adressierbar sind und daß der Anfangszählerstand der ersten Zähleranordnung (SZ, Reg5) bzw. der zweiten Zähleranordnung (LZ) vor der Aufnahme eines ersten Signalblockes in den Schreib-/Lese-Speicher (RAM) bzw. vor dem Auslesen dieses Signalblockes aus dem Schreib-/Lese-Speicher durch einen für beide Zähleranordnungen gleich festgelegten Grundzählerstand und bei Aufnahme bzw. bei Auslesen eines diesem ersten Signalblock folgenden Signalblockes durch den nach Auftreten der dem vorangegangenen Signalblock zugehörigen Blockendekennung (E) jeweils anstehenden momentanen Zählerstand gegeben ist.

5. Schaltungsanordnung nach Anspruch 4, **dadurch gekennzeichnet,** daß eine dritte Zähleranordnung (IZ, Reg6) mit einem Vor-/Rückwärtszähler (IZ) vorgesehen ist, welcher, ausgehend von einem den Leerzustand des Schreib-/Lese-Speichers (RAM) anzeigenden Anfangszählerstand, mit jedem Auftreten eines Schreibtaktes seinen momentanen Zählerstand in der einen Zählrichtung und mit jedem Auftreten eines Lesetaktes seinen momentanen Zählerstand in der anderen Richtung verändert und welcher bei Erreichen eines vorgegebenen Endzählerstandes ein den maximalen Füllzustand des Schreib-/Lese-Speichers anzeigendes Meldesignal abgibt,
und daß auf das Auftreten dieses Meldesignals hin einerseits die erste Zähleranordnung (SZ,Reg5) wieder den vor der Aufnahme des gerade empfangenen Signalblockes von ihr bereitgestellten Anfangszählerstand annimmt und andererseits die dritte Zähleranordnung (IZ, Reg6) ihren momentanen Zählerstand derart ändert, daß dieser dem Füllzustand des Schreib-/Lese-Speichers (RAM) vor der Aufnahme des gerade empfangenen Signalblockes entspricht.

6. Schaltungsanordnung nach Anspruch 5, **dadurch gekennzeichnet**, daß die erste Zähleranordnung (SZ,Reg5) und die dritte Zähleranordnung (IZ, Reg6) jeweils ein Register (Reg5 bzw. Reg6) aufweisen, in welches auf das Auftreten einer Blockanfangskennung (A) hin der von der zugehörigen Zähleranordnung gerade bereitgestellte momentane Zählerstand einschreibbar ist, und daß die beiden Zähleranordnungen den in ihrem zugehörigen Register eingetragenen Zählerstand auf das Auftreten eines Meldesignals hin als Anfangszählerstand übernehmen.

7. Schaltungsanordnung nach einem der Ansprüche 2 bis 6, **dadurch gekennzeichnet**, daß die Empfangssteuerung (EPS, ZReg) eine Vergleicheranordnung (Vg11) für einen Vergleich einer aufgenommenen Empfängeradresse bzw. Senderadresse mit einer der jeweils zugehörigen Steuereinrichtung innerhalb des Ringleitungssystems zugewiesenen Adresse aufweist, daß mit der Vergleicheranordnung eine Speicheranordnung (PROM, Reg7) mit einer Mehrzahl von Speicherzellen verbunden ist, in welchem sämtliche Steuersignale für die Behandlung von empfangenen Signalblöcken und Quittungssignalen gespeichert sind, daß die Speicheranordnung für eine Ansteuerung der jeweils in Frage kommenden Speicherzelle von der Vergleicheranordnung abgegebene Vergleichersignale und das Auftreten von Blockanfangskennung und Blockendekennung anzeigende Signale als Adressensignale zugeführt erhält und daß nach Maßgabe des von der Speicheranordnung (PROM, Reg7) bereitgestellten Steuersignals eine Behandlung des gerade empfangenen Signalblockes bzw. Quittungssignals erfolgt.

8. Schaltungsanordnung nach einem der Ansprüche 2 bis 7, **dadurch gekennzeichnet**, daß der Quittungsempfänger aus einem Register (Reg3) gebildet ist, welches von der Empfangssteuerung (EPS, ZReg) auf das Auftreten einer Blockendekennung (E) in Verbindung mit einer der der zugehörigen Steuereinrichtung zugewiesenen Adresse entsprechenden Senderadresse (SADR) hin für die Übernahme des zusammen mit dieser Adresse übertragenen Quittungssignals (QS) ein Übernahmesignal zugeführt erhält.

**Claims**

1. Method for transmitting data signals between control devices (SU0, SA;...;SUn, RA; TU0, RA;...; TUm, RA), connected to one another via a clock-controlled directionally dependently operated loop network (RING0, RING1), which are formed, in particular, by control devices of a data switching system, in which method data signals (DS1 to DSn) to be delivered from one control device to a further control device are transmitted section by section from control device to control device in the form of a signal block identified by a block start identification (A) and a block end identification (E), together with a receiver address (EADR) designating one of the control devices as receiver and preceding the data signals, with a transmitter address (SADR) designating the control device delivering the signal block as transmitter and with a dummy acknowledgement (LQ), in which method, in the control device designated by the receiver address, the signal block just received is copied for possible processing following the occurrence of the block start identification (A) and the receiver address (EADR) and the signal block itself is forwarded to the following control device in the loop network with replacement of the dummy acknowledgement (LQ) by an acknowledgement signal (QS) and in which method, during this forwarding, the acknowledgement signal (QS) is taken over for evaluation by the control device designated by the transmitter address (SADR), characterised in that a signal block is subdivided into a plurality of words having in each case a fixed number of bits, that two identification bits (A, E) are added to each of the words, that a first one of the identification bits (A) is only set to a fixed logic level ("1") as block start identification in the word carrying the receiver address, that the word carrying the transmitter address is transmitted before the word carrying the dummy acknowledgement (LQ) at the end of the signal block and in this connection the second one of the identification bits (E) is set to the fixed level ("1") as block end identification in the word carrying the transmitter address, that during the transmission of such a signal block by the control device designated by the receiver address (EADR), with the copying of the signal block concerned, the latter itself is forwarded, the first identification bit hitherto set as block start identification being reset and the dummy acknowledgement (LQ) being replaced by the acknowledgement signal (QS), and that in the control device by which the signal block concerned has previously been delivered, only the occurrence of the word carrying the transmitter address and having the set second identification bit is monitored for a taking-over of the word following this word and carrying the acknowledgement signal (QS).

2. Circuit arrangement for carrying out the method according to Claim 1, characterised in that each of the control devices exhibits a receiver arrangement (EP, Reg3) which is associated with a receive memory (EP) for accommodating at least one signal block intended for the associated control device and an acknowledgement receiver (Reg3) for accepting an acknowledgement signal, that the receive memory is connected to a receive control (EPS, zReg) which, following the occurrence of a block start identification (A) and a receiver address (EADR) corresponding to the address allocated to the respective control device, controls, on the one hand, the copying of the signal block just received into the receive memory (EP) and, on the other hand, the forwarding of the signal block to the following control device in the loop network with deletion of the block start identification (A) and addition of an acknowledgement signal (QS) to the transmitter address (SADR), and that the receive control (EPS, zReg), following the occurrence of the block end identification (E) in conjunction with a transmitter address (SADR) corresponding to the address allocated to the associated control device, effects the transfer of the acknowledgement signal transmitted together with this transmitter address into the acknowledgement receiver (Reg3).

3. Circuit arrangement according to Claim 2, characterised in that the receive memory (EP) exhibits a read/write memory (RAM) having a plurality of storage cells for accommodating at least one signal block including the associated block end identification (E), that the read/write memory is connected to a first counter arrangement (SZ, Reg5) which continuously addresses the said storage cells for the acceptance of a received signal block starting from a predetermined initial count, as determined by a count changing with a write clock corresponding to the transmission speed of the loop system, until the block end identification occurs, and that a second counter arrangement (LZ) is provided which, by means of a change in its count proceeding with a read clock corresponding to the operating speed of the respective control device, starting from a predetermined initial count, enables a signal block stored in the storage cells of the read/write memory (RAM) to be read out until the block end identification (E) contained in it occurs.

4. Circuit arrangement according to Claim 3, characterised in that the storage cells of the read/write memory (RAM) can be addressed in a circulating manner by the first counter arrangement (SZ, Reg5) and, respectively, the second counter arrangement (LZ) for the acceptance and, respectively, emission of successive signal blocks and that the initial count of the first counter arrangement (SZ, Reg5) and, respectively, of the second counter arrangement (LZ) is given by a basic count, identically fixed for both counter arrangements, before the acceptance of a first signal block into the read/write memory (RAM) and, respectively, before the reading of this signal block out of the read/write memory and, during acceptance and, respectively, during reading-out of a signal block following this first signal block, is given by the instantaneous count in each case present after the occurrence of the block end identification (E) associated with the preceding signal block.

5. Circuit arrangement according to Claim 4, characterised in that a third counter arrangement (IZ, Reg6) having an up/down counter (IZ) is provided which, starting from an initial count indicating the empty state of the read/write memory (RAM), changes its instantaneous count in one direction of counting with each occurrence of a write clock and changes its instantaneous count in the other direction with each occurrence of a read clock and which, when a predetermined final count is reached, emits an indicating signal indicating the maximum loading state of the read/write memory, and that, following the occurrence of this indicating signal, on the one hand, the first counter arrangement (SZ, Reg5) again assumes the initial count provided by it before the acceptance of the signal block just received and, on the other hand, the third counter arrangement (IZ, Reg6) changes its instantaneous count in such a manner that the latter corresponds to the loading state of the read/write memory (RAM) before the acceptance of the signal block just received.

6. Circuit arrangement according to Claim 5, characterised in that the first counter arrangement (SZ, Reg5) and the third counter arrangement (IZ, Reg6) in each case exhibit a register (Reg5 and, respectively, Reg6) into which the instantaneous count just provided by the associated counter arrangement can be written following the occurrence of a block start identification (A) and that the two counter arrangements take over as initial count the count entered in their associated register following the occurrence of an indicating signal.

7. Circuit arrangement according to one of Claims 2 to 6, characterised in that the receive control (EPS, zReg) exhibits a comparator arrangement (Vg11) for a comparison of an accepted receiver address and, respectively, transmitter address with an address allocated to the respectively associated control device within the loop network, that the comparator arrangement is connected to a storage arrangement (PROM, Reg7) having a plurality of storage cells, in which all control signals for processing received signal blocks and acknowledgement signals are stored, that the storage arrangement is supplied with comparator signals delivered by the comparator arrangement and with signals indicating the occurrence of block start identification and block end identification as address signals for activating the respective storage cell concerned and that the signal block or acknowledgement signal just received is processed as determined by the control signal provided by the storage arrangement (PROM, Reg7).

8. Circuit arrangement according to one of Claims 2 to 7, characterised in that the acknowledgement receiver is formed by a register (Reg3) which, following the occurrence of a block end identification (E) in conjunction with a transmitter address (SADR) corresponding to the address allocated to the associated control device, is supplied with a transfer signal by the receive control (EPS, ZReg) for taking over the acknowledgement signal (QS) transmitted together with this address.

**Revendications**

1. Procédé pour transmettre des signaux de données entre des dispositifs de commande (SU0, SA;...;SUn, RA; TU0, RA;...; TUm, RA), qui sont reliés entre eux par l'intermédiaire d'un système de lignes en anneau (RING0, RING1) commandé de façon cadencée et fonctionnant en fonction du sens de transmission et sont formés notamment par des dispositifs de commande d'un système de commutation de données, et selon lequel des signaux de données (DS1 à DSn), qui doivent être délivrés par un dispositif de commande à un autre dispositif de commande sont transmis, par sections, d'un dispositif de commande à un autre, sous la forme d'un bloc de signaux caractérisé par un indicatif de début de bloc (A) et un indicatif de fin de bloc (E), conjointement avec une adresse de récepteur (EADR) caractérisant l'un des dispositifs de commande en tant que récepteur et précédant les signaux de données, avec une adresse d'émetteur (SADR) désignant le dispositif de commande délivrant le bloc de signaux en tant qu'émetteur, et avec un accusé de réception vide (LQ), et selon lequel, lors de l'apparition d'un indicatif de début de bloc (A) et de l'adresse de récepteur (OAD), le bloc de signaux précisément reçu est copié par le dispositif de commande désigné par l'adresse du récepteur, pour un traitement possible, et le bloc de signaux lui-même est retransmis, moyennant le remplacement d'un accusé de réception vide (LQ) par un signal d'accusé de réception (QS), au dispositif de commande suivant dans le système de lignes en anneau, et selon lequel, lors de cette retransmission, le signal d'accusé de réception (QS) est transféré, pour une évaluation, par le dispositif de commande désignant l'adresse d'émetteur (SADR),

caractérisé par le fait

qu' un bloc de signaux est subdivisé en une multiplicité de mcts comportant respectivement un nombre fixé de bits, qu à chacun des mots sont adjoints deux bits caractéristiques (A,E),

qu'un premier des bits caractéristiques (A) est réglé à un niveau logique fixé ("1"), uniquement pour le mot indiquant l'adresse du récepteur, en tant qu'indicatif de début de bloc,

que le mot en tête l'adresse d'émetteur est transmis avant le mot en tête de l'accusé de réception vide à la fin du bloc de signaux et que le second des bits caractéristiques (E) en tant qu'indicatif de fin de bloc est positionné au niveau fixé ("1"), dans le mot en tête de l'adresse d'émetteur,

que lors de la transmission d'un tel bloc de signaux par le dispositif de commande désigné au moyen de l'adresse de récepteur (EADR) avec le copiage du bloc de signaux considéré, ce dernier est lui-même retransmis moyennant la remise à zéro du premier bit caractéristique positionné jusqu'alors en tant qu'indicatif de début de bloc et moyennant le remplacement de l'accusé de réception vide (LQ) par le signal d'accusé de réception (QS), et

que dans le dispositif de commande, qui a délivré précédemment le bloc de signaux considéré, seule l'apparition du mot indiquant l'adresse d'émetteur avec le second bit caractéristique positionné est contrôlé pour un transfert du mot qui succède audit mot et indique le signal d'accusé de réception (QS).

2. Montage pour la mise en oeuvre du procédé suivant la revendication 1, caractérisé par le fait

que chacun des dispositifs de commande possède un dispositif formant récepteur (EP, Reg3), auquel sont associés une mémoire de réception (EP) servant à recevoir au moins un bloc de signaux destiné au dispositif de commande associé, et un récepteur d'accusé de réception (Reg3) servant à recevoir un signal d'accusé de réception,

qu'à la mémoire de réception est raccordé un dispositif de commande de réception (EPS, ZReg), qui, lors de l'apparition d'un indicatif de début de bloc (A) et d'une adresse de récepteur (EADR) qui correspond à l'adresse affectée au dispositif de commande respectif, commande d'une part le copiage du bloc de signaux précisément reçu dans la mémoire de réception (EP) et d'autre part la retransmission du bloc de signaux au dispositif de commande suivant dans le système de lignes en anneau, moyennant l'effacement de l'indicatif de début de bloc (A) et l'adjonction d'un signal d'accusé de réception (QS) à l'adresse d'émetteur (SADR), et

que, lors de l'apparition de l'indicatif de fin de bloc (E) en liaison avec une adresse d'émetteur (SADR) correspondant à l'adresse affectée au dispositif de commande associé, le dispositif de commande de réception (EPS, ZReg) réalise le transfert du signal d'accusé de réception, transmis conjointement avec cette adresse d'émetteur, dans le récepteur d'accusé de réception (Reg3).

3. Montage suivant la revendication 2, caractérisé par le fait

que la mémoire de réception (E) comporte une mémoire d'enregistrement/lecture (RAM) possédant une multiplicité de cellules de mémoire et servant à recevoir au moins un bloc de signaux y compris l'indicatif de fin de bloc associé (A),

qu'à la mémoire d'enregistrement/lecture est raccordé un premier dispositif de comptage (SZ, Reg5), qui adresse en permanence, jusqu'à l'apparition de l'indicatif de fin de bloc, lesdites cellules de mémoire servant à recevoir un bloc de signaux reçus, à partir d'un état de comptage initial prédéterminé, en fonction d'un état de comptage qui varie avec une cadence d'enregistrement correspondant à la vitesse de transmission du système de lignes en anneau, et

qu'il est prévu un second dispositif de comptage (SZ) qui, à partir d'un état de comptage initial prédéterminé, permet, au moyen d'une modification de son état de comptage, qui se poursuit avec une cadence de lecture correspondant à la vitesse de travail du dispositif de commande respectif, une lecture d'un bloc de signaux mémorisé dans les cellules de mémoire d'enregistrement/lecture (RAM), jusqu'à l'apparition de l'indicatif de fin de bloc (E) contenu dans ce bloc de signaux.

4. Montage suivant la revendication 3, caractérisé par le fait que les cellules de la mémoire d'enregistrement/ lecture (RAM) peuvent être adressées cycliquement pour la réception ou la délivrance de blocs de signaux successifs par le premier dispositif de comptage (SZ, Reg5) ou par le second dispositif de comptage (LZ), et

que l'état de comptage initial du premier dispositif de comptage (SZ, Reg5) ou du second dispositif de comptage (SZ) est déterminé, avant la réception d'un premier bloc de signaux dans la mémoire d'enregistrement/lecture (RAM) ou avant la lecture de ce bloc de signaux à partir de la mémoire d'enregistrement/lecture, par un état de comptage de base fixé à une même valeur pour les deux dispositifs de comptage et, lors de la réception ou lors de la lecture d'un bloc de signaux succédant à ce premier bloc de signaux, par l'état de comptage instantané respectivement présent après l'apparition de l'indicatif de fin de bloc (E) associé au bloc de signaux précédent.

5. Montage suivant la revendication 4, caractérisé par le fait

qu'il est prévu un troisième dispositif de comptage (IZ,Reg6) possédant un compteur progressif/régressif (IZ), qui, à partir d'un état de comptage initial indiquant l'état vide de la mémoire d'enregistrement/lecture (RAM), modifie son état de comptage instantané dans un sens de comptage lors de chaque apparition d'une impulsion de cadence d'enregistrement, et modifie son état de comptage instantané dans l'autre sens lors de chaque apparition d'une impulsion de cadence de lecture, et qui, lorsqu'un état de comptage final prédéterminé est atteint, délivre un signal de signalisation indiquant l'état de remplissage maximum de la mémoire d'enregistrement/lecture, et

que, lors de l'apparition de ce signal de signalisation, d'une part un premier dispositif de comptage (SZ, Reg5) prend à nouveau l'état de comptage initial préparé pour lui avant la réception du bloc de signaux précisément reçu, et d'autre part le troisième dispositif de comptage (IZ, Reg6) modifie son état de comptage instantané de telle sorte que cet état de comptage correspond à l'état de remplissage de la mémoire d'enregistrement/lecture (RAM) avant la réception du bloc de signaux précisément reçu.

6. Montage suivant la revendication 5, caractérisé par le fait que le premier dispositif de comptage (RZ, Reg5) et le troisième dispositif de comptage (IZ, Reg6) possèdent chacun un registre (Reg5 ou Reg6), dans lequel, lors de l'apparition d'un indicatif de début de bloc (A), l'état de comptage instantané, précisément préparé par le dispositif de comptage associé, peut être enregistré, et que les deux dispositifs de comptage prennent, en tant qu'état de comptage initial, l'état de comptage introduit dans le registre qui leur est associé, lors de l'apparition d'un signal de signalisation.

7. Montage suivant l'une des revendications 2 à 6, caractérisé par le fait que le dispositif de commande de réception (EPS, ZReg) possède un dispositif comparateur (Vgll) pour une comparaison d'une adresse de récepteur ou d'une adresse d'émetteur reçue avec une adresse affectée au dispositif de commande respectivement associé à l'intérieur du système de lignes en anneau, qu'au dispositif comparateur est raccordé un dispositif de mémoire (PROM, Reg7) possédant une multiplicité de cellules de mémoire dans lesquelles sont mémorisés tous les signaux de commande pour le traitement de blocs de signaux reçus et de signaux d'accusé de réception reçus, que le dispositif de mémoire reçoit, pour une commande de la cellule de mémoire respectivement considérée, des signaux de comparaison délivrés par le dispositif comparateur et des signaux indiquant l'apparition d'un indicatif de début de bloc et d'un indicatif de fin de bloc, en tant que signaux d'adresses, et qu'un traitement du bloc de signaux ou du signal d'accusé de réception précisément reçu est réalisé en fonction du signal de commande préparé par le dispositif de mémoire (PROM, Reg7).

8. Montage suivant l'une des revendications 2 à 7, caractérisé par le fait que le récepteur d'accusé de réception est formé par un registre (Reg3), qui, lors de l'apparition d'un indicatif de fin de bloc (E) en liaison avec une adresse d'émetteur (SADR) correspondant à l'adresse affectée au dispositif de commande associé, reçoit de la part du dispositif de commande de réception (EPS, ZReg), un signal de transfert pour le transfert du signal d'accusé de réception (QS) transmis conjointement avec cette adresse.

# FIG 1

# FIG 2

# FIG 3

# FIG 4

# FIG 5

## a)

| A | E | | |
|---|---|---|---|
| 1 | 0 | EADR | |
| 0 | 0 | DS1 | |
| | | . | |
| | | . | |
| | | . | |
| 0 | 0 | DSn | |
| 0 | 1 | SADR | |
| 0 | 0 | LQ | |

## b)

| A | E | | |
|---|---|---|---|
| 0 | 0 | EADR | |
| 0 | 0 | DS1 | |
| | | . | |
| | | . | |
| | | . | |
| 0 | 0 | DSn | |
| 0 | 1 | SADR | |
| 0 | 0 | EADR | QS |

## c)

| A | E | | |
|---|---|---|---|
| 1 | 0 | EADR | |
| 0 | 0 | DS1 | |
| | | . | |
| | | . | |
| | | . | |
| 0 | 0 | DSn | |
| 0 | 0 | SADR | |
| 0 | 1 | EADR 1 | QS1 |

## d)

| A | E | | |
|---|---|---|---|
| 1 | 0 | EADR | |
| 0 | 0 | DS1 | |
| | | . | |
| | | . | |
| | | . | |
| 0 | 0 | DSn | |
| 0 | 0 | SADR | |
| 0 | 0 | EADR 1 | QS1 |
| 0 | 0 | EADR 2 | QS2 |
| | | . | |
| 0 | 1 | EADRm | QSm |